(19) Europäisches Patentamt
European Patent Office
Office européen des brevets

(11) Publication number: **0 274 270 B1**

(12) **EUROPEAN PATENT SPECIFICATION**

(45) Date of publication of patent specification: **23.09.92** (51) Int. Cl.$^5$: **G11B 7/24**

(21) Application number: **87311357.5**

(22) Date of filing: **23.12.87**

# (54) Optical recording material.

(30) Priority: **23.12.86 JP 305276/86**

(43) Date of publication of application:
**13.07.88 Bulletin 88/28**

(45) Publication of the grant of the patent:
**23.09.92 Bulletin 92/39**

(84) Designated Contracting States:
**DE GB**

(56) References cited:
**EP-A- 0 183 168**
**EP-A- 0 198 140**
**GB-A- 2 055 218**

**IBM TECHNICAL DISCLOSURE BULLETIN, vol. 21, no. 9, February 1979, page 3764, New York, US; J. BARGON et al.: "Photochemical hole burning materials involving hydroxyquinones as guest molecules in hydrogen bonded matrix materials"**

**PATENT ABSTRACTS OF JAPAN, vol. 9, no. 68 (P-344)[1791], 28th March 1985**

(73) Proprietor: **AGENCY OF INDUSTRIAL SCIENCE AND TECHNOLOGY**
**3-1, 1-chome, Kasumigaseki**
**Chiyoda-ku Tokyo(JP)**

(72) Inventor: **Yoshimura, M. c/o Ch.Kenkyusho**
**Mitsub.Denk.Kab.Kai**
**1-1, Tsukaguchi-Hommachi 8-Chome**
**Amagasaki-Shi, Hyogo-Ken(JP)**

(74) Representative: **Kyle, Diana et al**
**Elkington and Fife Prospect House 8 Pembroke Road**
**Sevenoaks, Kent TN13 1XR(GB)**

EP 0 274 270 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a material for optically recording informations, in particular to an optical recording material for carrying out a multiple record of informations at a dimension of wave length by the use of the hole burning reaction.

IBM Technical Disclosure Bulletin Vol. 21 No. 9 February 1979 page 3764 describes photochemical hole burning (PHB) for high density optical storage of information and describes a class of PHB materials incorporating hydroxyquinone absorbers into hydrogen bonded matrices.

Fig. 1 is a characteristic diagram showing an absorption spectrum of the conventional hole burning multiple record in the case where quinizarin is used as an optical recording material bringing about the hale burning reaction, in which an absorptivity is taken on an axis of ordinate while a wave length of light (nm) is taken on an axis of abscissa. A hole of the absorptivity shown in Fig. 1 is brought about by a photo isomerization of a quinizarin molecule corresponding to an energy of a light having a cave length same as a laser beam incident upon quinizarin, that is to say, the hole burning reaction, and the existence of this hole is used as a signal of 0 and 1 bit to carry out the multiple record at a dimension of wave length of a light.

As a rule, in the multiple record using the hole burning reaction, the multiplification to an extent of $10^3$ is possible, and as a result, the optical record density per unit area $10^3$ times as dense as that in the conventional optical recording method, that is to say, a high density of 10" bits/$cm^2$, can be attained.

In the optical recording apparatus using the hole burning reaction, it is preferable that an optical absorption wave length range of an optical recording material coincides with a light emitting band range of a semi-conductor laser, and a hole signal is easy to enter a long wave length side in comparison with a short wave length side. However, a problem is that such an optical recording material having an optical absorption wave length range coinciding with a semi-conductor laser wave length range having a relatively long wave length range has not been found up to now.

The present invention has been achieved in order to solve the above described problem.

It is a first object of the present invention to provide an optical recording material, which is easy to shift an optical absorption wave length range toward longer wave lengths and bring about the hole burning reaction by a semi-conductor laser beam, by using a 2-hydroxyethylmethacrylate polymer alone or together with at least one other polymer comprising a functional group having a dipole moment of 1D or more as a carrier.

It is a second object of the present invention to provide an optical recording material, which is easy to shift an optical absorption wave length range toward longer wave lengths and a hole signal is easy to enter, by using a 2-hydroxyethylmethacrylate polymer alone or together with at least one other polymer comprising a functional group having a dipole moment of 1D or more as a carrier.

Thus, the present invention provides an optical recording material comprising an optical recording medium which uses compounds which bring about the hole burning reaction and a carrier for dissolving and carrying said optical recording medium, characterised in that the carrier is a 2-hydroxyethylmethacrylate polymer or is formed of a polymer of 2-hydroxyethylmethacrylate and at least one other polymer comprising a functional group having a dipole moment of ID or more.

The invention is more fully illustrated in the following detailed description with reference to the accompanying drawings.

Fig. 1 is a characteristic diagram showing an absorption spectrum of the conventional optical recording material;

Fig. 2 is a characteristic diagram showing an absorption spectrum of an optical recording material according to the present invention together with that of the conventional optical recording material;

Fig. 3 is a characteristic diagram showing a spectrum written in an optical recording material according to the present invention; and

Fig. 4 is a diagram showing an energy level of an optical recording material according to the present invention.

An optical recording material according to the present invention uses compounds, which bring about the hole burning reaction, such as naphthoquinone series of dyestuff derivatives, for example quinizarin, and polphyrine series of dyestuff derivatives, as an optical recording medium and 2-hydroxyethylmethacrylate polymer having two functional groups having a large polarity, for example carbonyl group and hydroxylic group, as a carrier for uniformly dissolving and carrying the optical recording member, whereby shifting an optical absorption wave length range of the optical recording material comprising both said compounds toward longer wave lengths, making the hole signal easily enter, and leading to the possibility of using a semi-conductur laser as a light source of the optical record.

The shift of the optical absorption wave length range of the optical recording medium according to the present invention toward longer wave lengths results from the stabilization of an excited $\pi^*$ elec-

tron state of the $\pi$-$\pi^*$ transfer of a dyestuff compound, such as quinizarin, used as the optical recording member in comparison with a base electron state by the polarity of a compound having a large dielectric constant used as the carrier.

That is to say, the compound having a large polarity as the carrier for uniformly dissolving and carrying the optical recording medium has a large permanent dipole. Accordingly, ① a trailing force due to a mutual action between permanent dipoles and ② an induced force due to a mutual action between a permanent dipole and an induced dipole, that is, two van der Waals forces, are applied between said carrier and the dyestuff compound used as the optical recording member.

On the other hand, the absorption wave length range of the dyestuff compound used as the optical recording medium is mainly dependent upon the $\pi$-$\pi^*$ transfer. And, the separation degree of electric charge of the electron state (in short, a degree of polarity) is larger in the excited state in the same one molecule, and as a result, also the dipole moment is larger in the excited state. Accordingly, both mutual actions due to said two van der Waals forces, that is to say, ① the trailing force and ② the induced force, are larger in the excited state.

A stabilizing energy $[\Delta E]_f^e$ in the excited state is larger than a stabilizing energy $[\Delta E]_e^g$ in the base state in the $\pi$-$\pi^*$ transfer by said van der Waals mutual action, as shown in Fig. 4 showing the energy level. As a result, the absorption wave length range is shifted toward longer wave lengths. Referring now to Fig. 4, reference numeral 1 designates a base state in a non-polar carrier, reference numeral 2 designating an excited state in the non-polar carrier, reference numeral 3 designating a base state in a polar carrier, reference numeral 4 designating an excited state in the polar carrier, reference numeral 5 designating a base state which received a hydrogen bond, and reference numeral 6 designating an excited state which received a hydrogen band, respectively.

Now, an extent of the van de Waals mutual action between the carrier and the dyestuff compound bringing about both stabilizing energies $[\Delta E]_f^e$ and $[\Delta E]_e^g$ which cause the shift toward longer wave lengths is mainly dependent upon two factors. It goes without saying that at first one of them is their dipole moments. The larger the dipole moment becomes, the larger said mutual action becomes, whereby the larger the stabilizing energy becomes, and as a result, also the extent of the shift toward longer wave lengths. The other one of them is an arrangement characteristic of both dipole moments. When the dyestuff molecule and the carrier molecule are arranged so that a product of both dipole moments, that is, the mutual action, may take a maximum value, the extent of the shift toward longer wave lengths becomes the largest. The mutual action due to the hydrogen bond is applied in addition to the mutual action due to the van der Waals force leads to a still more stabilization of the excited state and the shift toward still more longer wave lengths.

On account of the above described reasons, the shift of the optical absorption wave length range of the optical recording material according to the present invention toward longer wave lengths can be achieved.

In addition, in order to control the arrangement characteristics of said dipole moments in an optimum manner, the optical recording material is preferably subjected to such a treatment as heat treatment and application of an electric field in the production thereof.

The preferred embodiment of the present invention is described below.

Quinizarin (hereinafter referred to as DAQ) as the optical recording member bringing about the hole burning reaction and 2-hydroxyethylmethacrylate polymer (hereinafter referred to as HEMA) as the polar carrier for uniformly dissolving and carrying DAQ are weighed so that a molar ratio of DAQ to HEMA may be $10^{-4}$. These compounds are dissolved in ethylene glycol of 25 cc as a solvent at a ratio of HEMA of 3 g/25 cc and the resulting solution is poured into a glass dish and subjected to a heat treatment for 7 hours at 80 °C to remove the solvent. Subsequently, a film with DAQ uniformly dissolved and carried in HEMA is produced by the usual film-casting method.

In addition, in the above described process, the molar ratio of DAQ to HEMA is set within the range of $10^{-5}$ to $10^{-3}$, preferably at $10^{-4}$. In addition, the solvent for dissolving said both compounds include alcoholic solvents, such as methanol and methylcelsol, in addition to the above described ethylene glycol. In addition, the temperature, at which the heat treatment of the solution is carried out, is set at an appointed value in a range of 40 to 100 °C.

An absorption spectrum of the film produced through the above described process was measured. The result is shown together with that of the conventional one in Fig. 2 which is a characteristic diagram. Referring to Fig. 2, an absorptivity is taken on an axis of ordinate while a wave length (nm) is taken on an axis of abscissa. A characteristic curve (A) shows an absorption spectrum of DAQ/HEMA series of optical recording material according to the present preferred embodiment while a characteristic curve (B) shows an absorption spectrum of DAQ/PMMA series of optical recording material according to the conventional example. As found from Fig. 2, in the present preferred embodiment, the absorption by DAQ arrived until 650 nm. In the conventional example, the absorption disappeared in the vicinity of 550 nm. That is to say, the absorption shifted by about 100 nm toward longer wave lengths.

Subsequently, laser beam having several wave lengths within a range of 570 to 580 nm have been incident upon this film under condition that it is cooled at a temperature of liquefied helium to write in it, that is, the hole has been formed and recorded in it. As the result that holes 11 to 16 have been observed in it, as shown in the characteristic diagram of Fig. 3, whereby proving that the film, to which the optical recording material according to the present preferred embodiment has been applied can carry out the multiple record by the hole burning reaction. It has also proved that the absorption end was shifted until 650 nm (refer to Fig. 2) toward longer wave lengths, holes being formed at 570 to 580 nm (refer to Fig. 3), holes being easy to form in a longer wave length range in comparison with in a shorter wave length range, and a semi-conductor laser being able to be used.

Another preferred embodiment of the present invention is described below.

4, 11-diamino-5, 10-dihydro-2-(2-hexyloxy)-ethyl-3-thioxonaphtho-[2, 3-1]isoindoline-1, 5, 10-trion (hereinafter referred to NQD) is used as the optical recording medium bringing about the hole burning reaction, said HEMA being used as the polar carrier for uniformly dissolving and carrying NQD, HEMA and NQD being weighed so that a molar ratio of NQD to HEMA may be $10^{-4}$, they being dissolved in methanol as a solvent at a ratio of 5 g in methanol of 50 cc, and the solution being subjected to a heat treatment for 10 hours at 50 °C to remove the solvent. Subsequently, a film with NQD uniformly dissolved and carried in HEMA is produced by a usual film-casting method.

An absorption spectrum of this film was measured with the shift of the absorption end as long as about 1050 nm. In the conventional case where NQD was carried in PMMA, the absorption end disappeared at 760 nm and the absorption range of NQD was shifted toward longer wave lengths by about 300 nm. In addition, laser beams having several wave lengths within a range of 750 to 760 nm were incident upon the film with a result that holes alike to those shown in Fig. 3 were observed and it was proved that the holes were easy to be formed and the optical multiple record was possible.

The polar carrier used in the present invention comprises HEMA alone or together with one or more other polymers such as polymers comprising a functional group having a large polarity, that is, a compound comprising a functional group having a dipole moment $\mu$ of 1.0 D (debye) or more, for example, a polar functional group, such as - OH, - CONH -, - CONHCO -, - $NH_2$, - NH -, - COOH, - $CO_2R$,

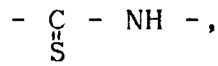

and - $NO_2$ and a polar group similar thereto, can be used. It is sufficient that the functional group is contained in at least one of a side chain and a main chain of the polymer. Also the functional group is not limited to one kind but the polymer comprising two kinds or more of functional group can be used. It is preferable to use the polymer comprising two kinds or more of functional group.

As above described in detail, according to the present invention, HEMA is used as a carrier to obtain an optical recording material with an optical absorption wave length range shifted toward longer wave lengths and easy to write in. As a result, a semi-conductor laser can be easily used as a laser for recording.

## Claims

1. An optical recording material comprising an optical recording medium which uses compounds which bring about the hole burning reaction and a carrier for dissolving and carrying said optical recording medium, characterised in that the carrier is a 2-hydroxyethylmethacrylate polymer or is formed of a polymer of 2-hydroxyethylmethacrylate and at least one other polymer comprising a functional group having a dipole moment of 1.0 D (debye) or more.

2. An optical recording material as claimed in Claim 1, in which said other polymer is a compound comprising a functional group selected from the groups consisting of - OH, - CONH -, - CONHCO -, - $NH_2$, - NH -, - COOH, - $CO_2R$,

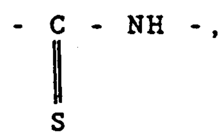

and - $NO_2$.

## Patentansprüche

1. Optisches Aufzeichnungsmaterial, umfassend ein optisches Aufzeichnungsmedium, das Verbindungen verwendet, die die Lochbrennreaktion zuwege bringen, und einen Träger zum

Lösen und Übertragen des optischen Aufzeichnungsmediums, dadurch gekennzeichnet, daß der Träger ein 2-Hydroxyethylmethacrylat-Polymer ist oder gebildet wird aus einem Polymer von 2-Hydroxyethylmethacrylat und wenigstens einem anderen Polymer, umfassend eine funktionelle Gruppe mit einem Dipolmoment von 1,0 D (Debye) oder mehr.

**2.** Optisches Aufzeichnungsmaterial nach Anspruch 1, worin das andere Polymer eine Verbindung ist, die eine funktionelle Gruppe umfaßt, ausgewählt aus der Gruppe bestehend aus -OH, -CONH-, -CONHCO-, $-NH_2$, -NH-, -COOH, $-CO_2R$,

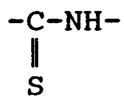

und-$NO_2$.

## Revendications

**1.** Matériau d'enregistrement optique comprenant un milieu d'enregistrement optique qui fait appel à des composés qui provoquent la réaction de brûlage des trous et un support pour dissoudre et porter ledit milieu d'enregistrement optique, caractérisé en ce que le support est un polymère de méthacrylate de 2-hydroxyéthyle ou est formé d'un polymère de méthacrylate de 2-hydroxyéthyle et d'au moins un autre polymère comprenant un groupe fonctionnel ayant un moment dipolaire de 1,0 D (debye) ou plus.

**2.** Matériau d'enregistrement optique selon la revendication 1, où ledit autre polymère est un composé comprenant un groupe fonctionnel choisi parmi les groupes formés de -OH, -CONH-, -CONHCO-, $-NH_2$, -NH-, -COOH, $-CO_2R$,

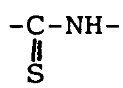

et -$NO_2$.

Fig. 1
Prior Art

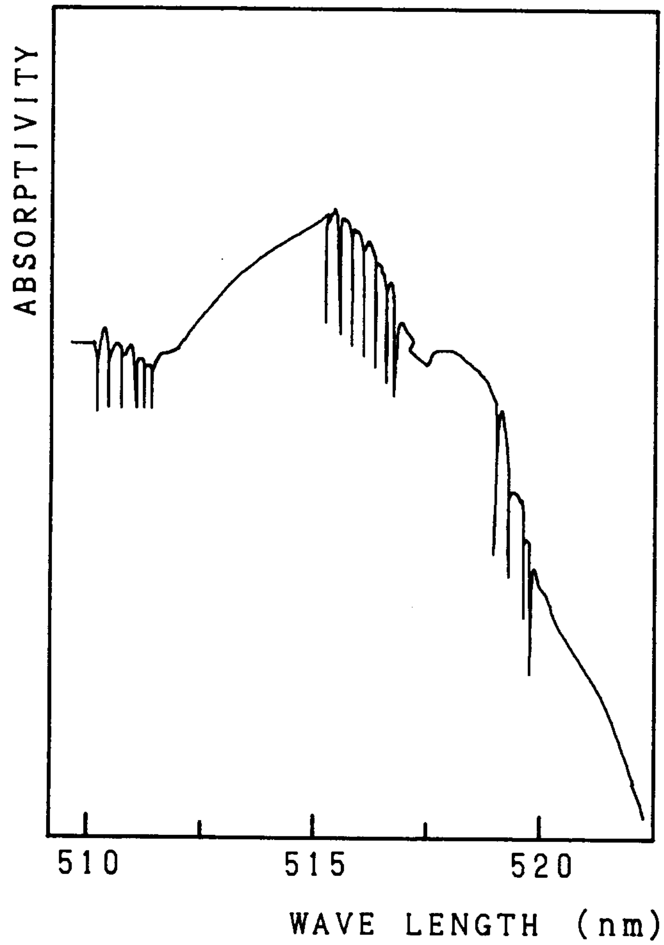

Fig. 2

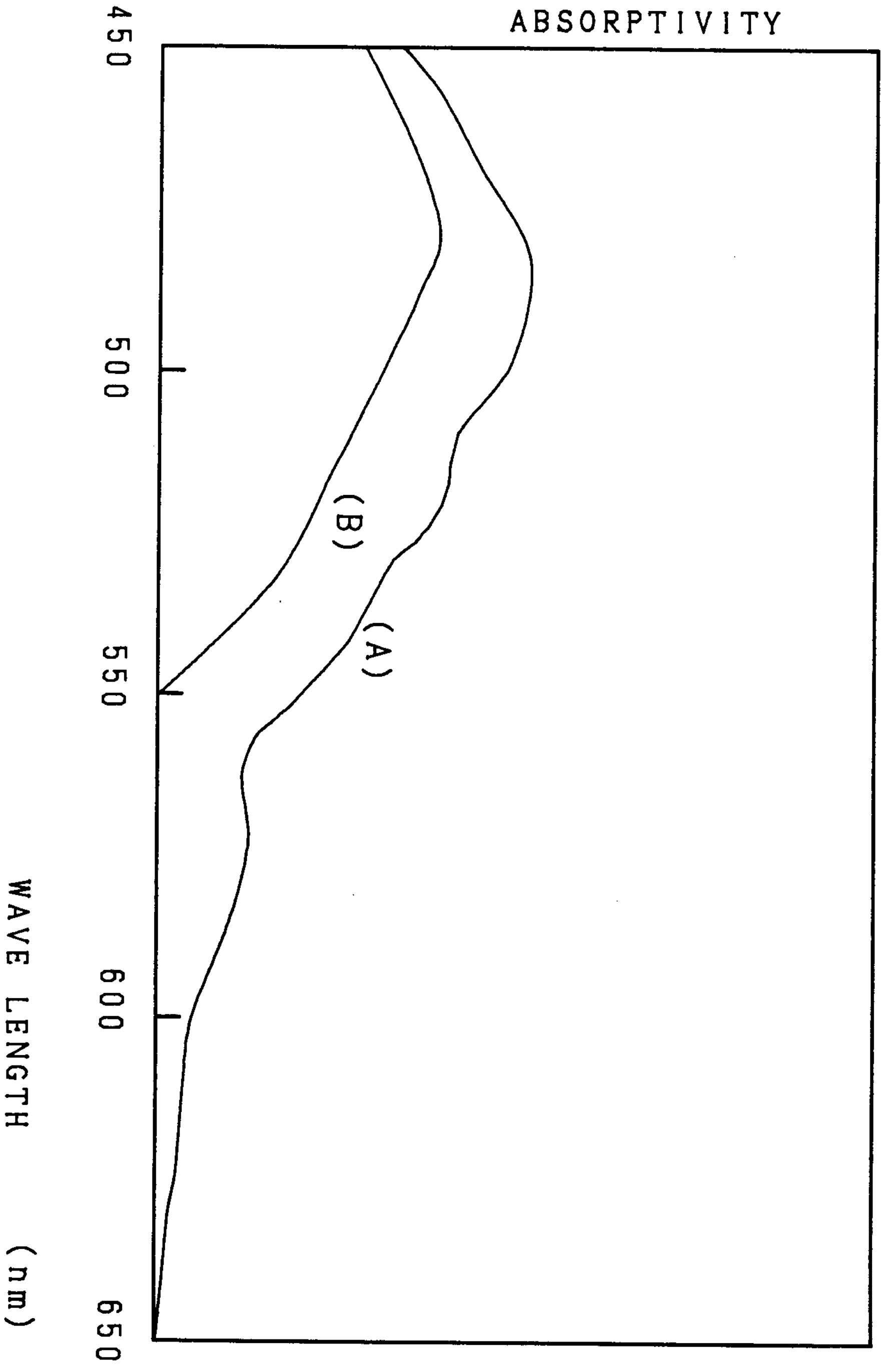

Fig. 3

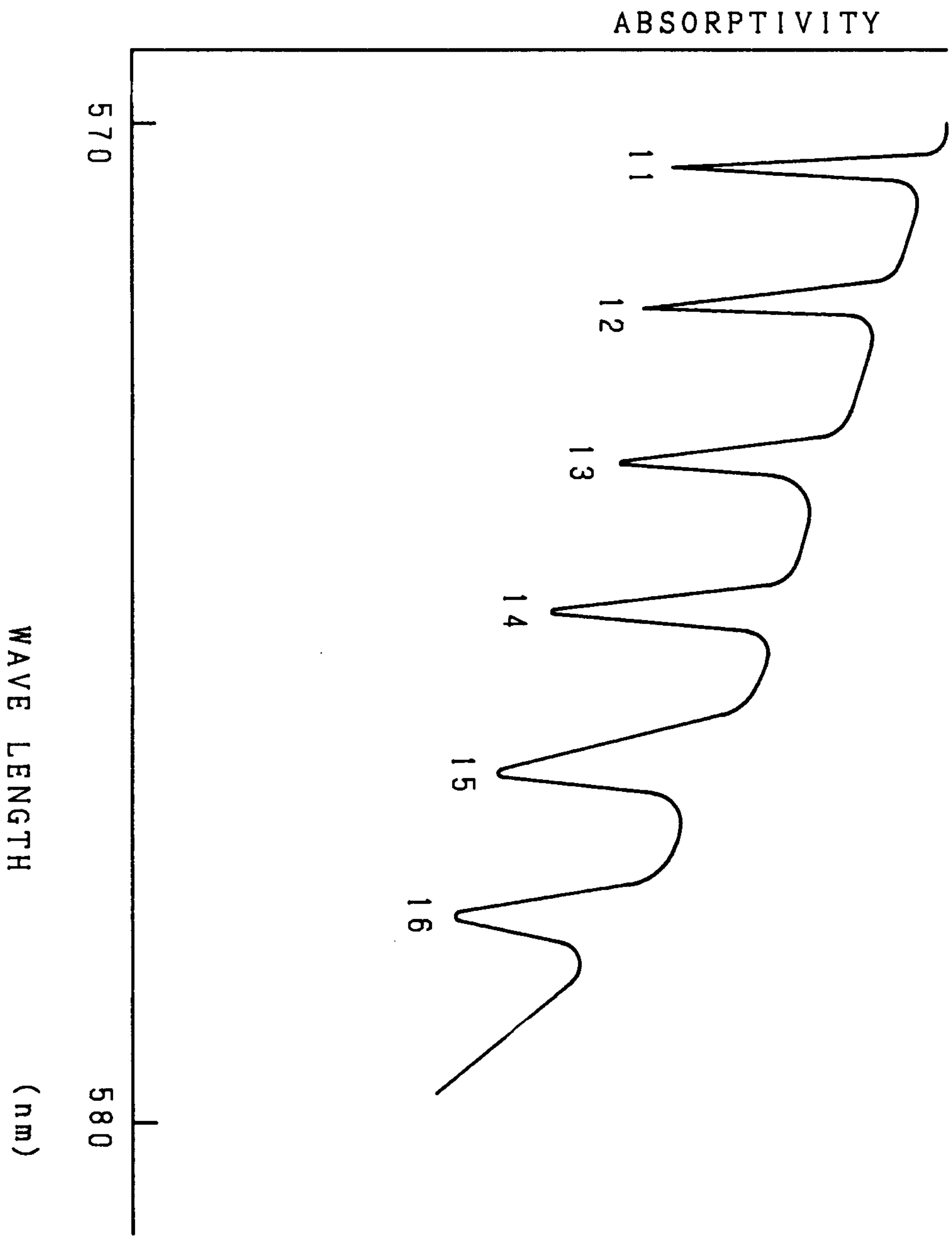

Fig. 4

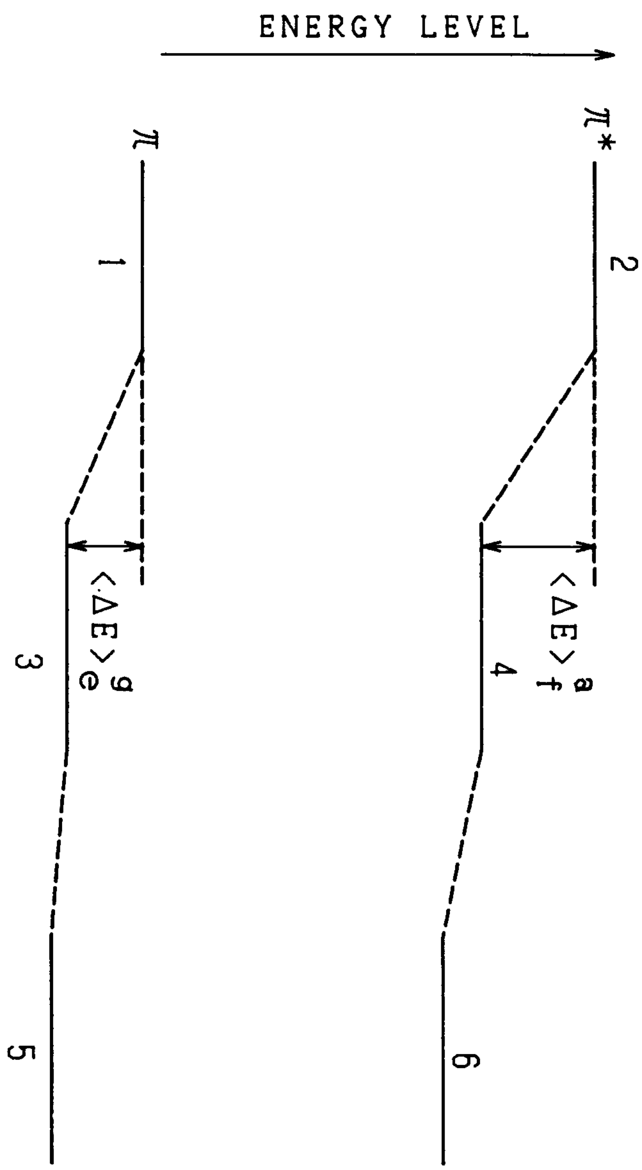
ENERGY LEVEL
π
π*
1
2
$\langle \Delta E \rangle_e^g$
$\langle \Delta E \rangle_f^a$
3
4
5
6